# EUROPEAN PATENT APPLICATION

(11) **EP 3 726 011 A1**
(43) Date of publication of application: **21.10.2020**
(21) Application number: 19215530.7
(22) Date of filing: 12.12.2019
(51) Int. Cl.: F01D 15/10, F02C 6/00

(54) **POWER MODULE WITH BLOW DOWN FUEL AND PROPELLANT DELIVERY SYSTEM**

(30) Priority: 14.04.2019 US 201916383622
(71) Applicant: Hamilton Sundstrand Corporation, Charlotte, NC 28217-4578 (US)
(72) Inventor: HIMMELMANN, Richard A., Beloit, WI Wisconsin 53511 (US)
(74) Representative: Dehns

(57) **Abstract**

A power module includes a turbine (106), a first pressure vessel (114) operatively connected to the turbine, and a second pressure vessel (116). The second pressure vessel is in fluid communication with the first pressure vessel and is fluidly connected to the first pressure vessel in series to drive a fuel or a propellant charge disposed within the first pressure vessel to a gas generator (104) for generating electrical power using the turbine. Unmanned Aerial vehicles and methods or generating electrical power are also described.

## Description

### BACKGROUND

The present disclosure generally relates to power modules, and more particularly to power modules having blow down fuel or propellant delivery systems.

Vehicles, such as aircraft, commonly carry devices requiring electrical power. In applications where the power requirements are relatively high the electrical power is provided by an on-board generator, which typically rotate a magnetic element carried by a rotor supported for rotation relative to a stator winding. The mechanical rotation is generally provided by an engine, such as a gas turbine engine or an internal combustion engine, which rotates the magnetic element. In applications where the power requirements are relatively low the electrical power is generally provided by a battery, which is typically discharged during vehicle operation.

In some vehicles the power requirements can be below the level where engine-driven generators are efficient and above the level where battery power is practical. This can limit the period of time that the vehicle can operate between charges or require the use of a remote power source, such as through a tether or umbilical. While a tether or an umbilical can provide the capability for missions of greater duration using a remote power source, the tether or umbilical generally limits the height or distance that a vehicle can operate from the power source.

Such vehicle power systems have generally been satisfactory for their intended purpose. However, there remains a need for improved power modules, unmanned aerial vehicles, and methods of generating electrical power. The present disclosure provides a solution to this need.

### BRIEF DESCRIPTION

In certain embodiments a power module is provided. The power module includes a turbine, a first pressure vessel operatively connected to the turbine, and a second pressure vessel. The second pressure vessel is in fluid communication with the first pressure vessel and is connected to the first pressure vessel in series to drive liquid fuel or propellant disposed within the first pressure vessel to a gas generator for generating electrical power using the turbine.

In addition to one or more of the features described above, or as an alternative, further embodiments may include a pressure regulator fluidly connecting the second pressure vessel with the first pressure vessel.

In addition to one or more of the features described above, or as an alternative, further embodiments may include a throttle valve fluidly connect the first pressure vessel with the turbine.

In addition to one or more of the features described above, or as an alternative, further embodiments may include a generator operatively associated with the turbine and a power converter electrically connected to the generator.

In addition to one or more of the features described above, or as an alternative, in further embodiments the turbine may comprise an impulse turbine having a single stage.

In addition to one or more of the features described above, or as an alternative, further embodiments may include a gas generator fluidly connecting the first pressure vessel with the turbine.

In addition to one or more of the features described above, or as an alternative, further embodiments may include that the gas generator has a decomposition chamber for decomposing a liquid mono-propellant driven to the gas generator.

In addition to one or more of the features described above, or as an alternative, further embodiments may include that the gas generator has a combustion chamber for oxidizing a liquid fuel driven to the gas generator.

In addition to one or more of the features described above, or as an alternative, further embodiments may include a mono-propellant charge disposed within the first pressure vessel and a motive gas charge disposed within the second pressure vessel and at least partially within the first pressure vessel, the second pressure vessel maintaining the motive gas charge at higher pressure than pressure of the mono-propellant disposed within the first pressure vessel.

In addition to one or more of the features described above, or as an alternative, further embodiments may include a hydrazine charge disposed within the first pressure vessel and a nitrogen charge disposed within the second pressure vessel and at least partially within the first pressure vessel.

In addition to one or more of the features described above, or as an alternative, further embodiments may include a liquid fuel charge disposed within the first pressure vessel and an oxidizer charge disposed within the second pressure vessel and at least partially within the first pressure vessel, the second pressure vessel maintaining the oxidizer charge at higher pressure than pressure within the first pressure vessel.

In addition to one or more of the features described above, or as an alternative, further embodiments may include a JP-8 charge disposed within the first pressure vessel and a compressed air charge disposed within the second pressure vessel and at least partially within the first pressure vessel.

In addition to one or more of the features described above, or as an alternative, further embodiments may include a third pressure vessel operatively connected to the turbine, the third pressure vessel fluidly connecting the second pressure vessel in series with the turbine.

In addition to one or more of the features described above, or as an alternative, further embodiments may include a mixing valve fluidly connecting the first pressure vessel and the third pressure vessel with the turbine.

In addition to one or more of the features described above, or as an alternative, further embodiments may include a fuel charge disposed within the first pressure vessel, an inert gas charge disposed within the second pressure vessel, and an oxidizer charge disposed within the third pressure vessel, wherein the second pressure vessel maintains the inert gas charge at a pressure greater than pressure within the first pressure vessel and the third pressure vessel.

In addition to one or more of the features described above, or as an alternative, further embodiments may include a JP-8 charge disposed within the first pressure vessel and a nitrogen charge disposed within the second pressure vessel. A nitrous oxide charge disposed within the third pressure vessel and at least a portion of the first pressure vessel and the third pressure vessel are occupied by nitrogen. The the second pressure vessel maintains the nitrogen charge at higher pressure than pressure within the first pressure vessel and pressure within the third pressure vessel, the pressure within the third pressure vessel substantially equivalent to the pressure within the first pressure vessel

In accordance with certain embodiments an unmanned aerial vehicle is provided. The unmanned aerial vehicle includes a power module as described above, has no fuel pumping system, and the turbine is an impulse turbine having a single stage. A pressure regulator fluidly connects the second pressure vessel with the first pressure vessel, a throttle valve fluidly connects the first pressure vessel with the turbine, and a gas generator with a combustion chamber fluidly connects the first pressure vessel with the turbine. A liquid fuel charge is disposed within the first pressure vessel and an oxidizer charge disposed is within the second pressure vessel and at least partially within the first pressure vessel, the second pressure vessel maintaining the oxidizer charge at higher pressure than pressure within the first pressure vessel.

It is also contemplated that, in accordance with certain embodiments, a method of generating electric power is provided. The method includes charging a first pressure vessel with a fuel or a propellant, charging a second pressure vessel with a motive gas, and generating a flow of high pressure gas by driving the fuel or propellant serially from the first pressure vessel fluidly toward a turbine. The turbine is rotated using the flow of high pressure gas and electric power generated using mechanical rotation provided by the turbine.

In addition to one or more of the features described above, or as an alternative, further embodiments may include the first pressure vessel being charged prior to the second pressure vessel being charged.

In addition to one or more of the features described above, or as an alternative, further embodiments may include the second pressure vessel being charged to a higher pressure than the first pressure vessel.

Technical effects of the present disclosure includes the capability to generate electrical power using a relatively lightweight and efficient portable generator module. In certain embodiments the power module has greater power density than a battery power module. In accordance with certain embodiments the power module can be refueled relatively quickly, e.g., more rapidly than the time required to recharge a battery module. It is also contemplated that the power module not include a fuel pumping system, reducing the cost and/or complexity of the power module. For example, in certain embodiments blow down turbo-generator systems described herein utilize a mono-propellant such as hydrogen peroxide, hydrazine, or Otto fuel without employing a fuel pump. Alternatively, in accordance with certain embodiments, blow down turbo-generator systems described herein utilize a kerosene-based fuel such as JP-8 or diesel fuel in conjunction with an oxidizer provided by a compressor without employing a fuel pump.

### BRIEF DESCRIPTION OF THE DRAWINGS

The following descriptions should not be considered limiting in any way. With reference to the accompanying drawings, like elements are numbered alike:
FIG. 1 is a schematic view of a vehicle carrying a power module constructed in accordance with the present disclosure, showing an unmanned aerial vehicle carrying a power module with a turbine connected to a gas generator for generating electrical power using chemical energy provided to the gas generator by a blow down fuel or propellant system;
FIG. 2 is a schematic view of the power module of FIG. 1, showing a blow down fuel or propellant system employing a mono-propellant for communicating chemical energy to the gas generator, according to an embodiment;
FIG. 3 is a schematic view of the power module of FIG. 1, showing a blow down fuel or propellant system employing a driven oxidizer for communicating chemical energy to the gas generator, according to an another embodiment;
FIG. 4 is a schematic view of the power module of FIG. 1, showing a blow down fuel or propellant system employing a drive oxidizer for communicating chemical energy to the gas generator, according to yet another embodiment; and
FIG. 5 is a schematic view of a method of generating electrical power, showing operations of the method according to an illustrative embodiment.

### DETAILED DESCRIPTION

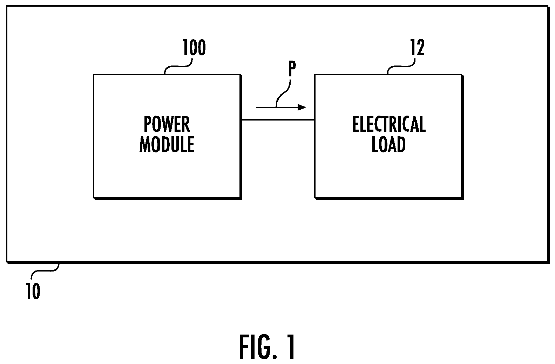

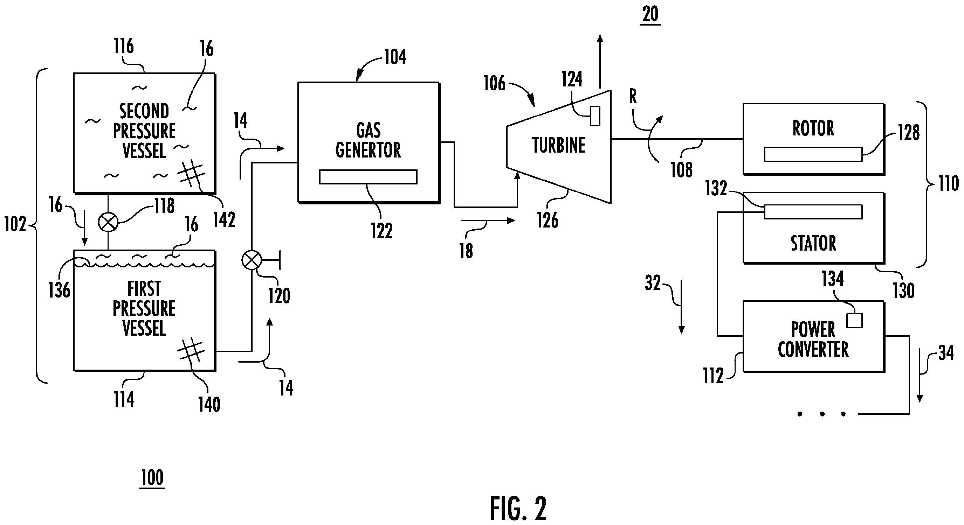

Reference will now be made to the drawings wherein like reference numerals identify similar structural features or aspects of the subject disclosure. For purposes of explanation and illustration, and not limitation, a partial view of an exemplary embodiment of power module in accordance with the disclosure is shown in FIG. 1 and is designated generally by reference character 100. Other embodiments of power modules, vehicles carrying power modules, and methods of generating electrical power in accordance with the present disclosure, or aspects thereof, are provided in FIGS. 2-5, as will be described. The systems and methods described herein can be used for generating electrical power in vehicles, such as unmanned aerial vehicles, though the present disclosure is not limited to unmanned aerial vehicles or to aerial vehicles in general.

With reference to FIG. 1, a vehicle 10, e.g., an unmanned aerial vehicle, is shown. The vehicle 10 carries a power module 100 and one or more electrical load 12. The power module 100 is configured and adapted to provide a flow of electrical power P to one or more electrical load 12. In certain embodiments the electrical power P is direct current (DC) power and the one or more electrical load 12 is a DC load. In accordance with certain embodiment the electrical power P is alternating current (AC) power and the one or more electrical load 12 is an AC power load. Although described herein in the context of an unmanned aerial vehicle it is to be understood and appreciated that other types of vehicles and electrical loads can also benefit from the present disclosure, such as unmanned marine and terrestrial vehicles. Further, it is also contemplated that certain types of manned vehicles can also benefit from the present disclosure.

With reference to FIG. 2, the power module 100 is shown. The power module 100 includes a blow down system 102, a gas generator 104, and a turbine 106. The power module 100 also includes an interconnect shaft 108, an electrical generator 110, and a power converter 112.

The blow down system 102 is arranged to drive a flow of propellant 14 to the gas generator 104 using a flow of motive gas 16. In this respect the blow down system 102 includes a first pressure vessel 114, a second pressure vessel 116, a pressure regulator 118, and a throttle valve 120. The first pressure vessel 114 connects the second pressure vessel 116 in series with the turbine 106 through the gas generator 104. The throttle valve 120 is arranged fluidly between the first pressure vessel 114 and the gas generator 104, the throttle valve 120 fluidly connecting the first pressure vessel 114 with the gas generator 104. The pressure regulator 118 is arranged fluidly between the second pressure vessel 116 and the first pressure vessel 114, the pressure regulator 118 fluidly connecting the second pressure vessel 116 with the first pressure vessel 114.

The gas generator 104 is arranged fluidly between the first pressure vessel 114 and the turbine 106, fluidly connects the first pressure vessel 114 with the turbine 106, and includes a decomposition chamber 122. The decomposition chamber 122 is arranged to decompose the propellant 14 received from the first pressure vessel 114 to form high pressure decomposition products 18, which the decomposition chamber 122 provides to the turbine 106.

The turbine 106 is in fluid communication with the gas generator 104, is operatively connected to the electrical generator 110 by the interconnect shaft 108, and is configured and adapted to provide mechanical rotation R to the electrical generator 110 using work extracted from a flow of high pressure decomposition products 18 received from the gas generator 104. More specifically, the turbine 106 expands the flow of high pressure decomposition products 18 received from the gas generator 104, extracting work therefrom prior to issuing the expanded high pressure decomposition products 18 to the ambient environment 20. In certain embodiments the turbine 106 includes an impulse turbine 126, providing radial compactness to the turbine 106, a diameter on the order of about four (4) inches (about 10.2 centimeters). In accordance with certain embodiments, the turbine 106 optionally includes a single and not more than a single stage 124, providing axial compactness to the turbine 106 to be axially compact.

The electrical generator 110 is operatively associated with the turbine 106. More specifically the electrical generator 110 is connected to the turbine 106 by the interconnect shaft 108, which communicates the work W extracted from the flow of high pressure decomposition products 18 as mechanical rotation to the electrical generator 110. It is contemplated that the electrical generator 110 be an alternator-type generator. In this respect the electrical generator 110 includes a permanent magnet 128 fixed in rotation relative to the interconnect shaft 108 and supported for rotation relative to a stator 130. The stator 130 supports a stator winding 132 that, responsive to magnetic flux communicated to from the permanent magnet 128, provides a current flow of variable frequency AC power 32 to the power converter 112.

The power converter 112 is arranged to convert the variable frequency AC power 32 into DC power 34,which the power converter 112 provides to the electrical load 12 (shown in FIG. 1). In certain embodiments the power converter 112 includes a rectifier circuit 134, which can include a solid-state switch array for active rectification of the variable frequency AC power 32 into constant frequency DC power 34, or a diode bridge for passive rectification of the variable frequency AC power 32 into DC power 34. Employment of a diode bridge simplifies the power module 100 as there is not need to generate a switching algorithm and/or dissipate heat generated by operation of solid-state switch devices during conversion of the variable frequency AC power 32 into the constant frequency DC power 34.

As shown in FIG. 2 a mono-propellant charge 136 is disposed within the first pressure vessel 114, a motive gas charge 138 is disposed within the second pressure vessel 116, and at least a portion of the motive gas charge 138 is disposed within the second pressure vessel 116. The second pressure vessel 116 maintains the motive gas charge 138 at a pressure that is higher than a pressure of the mono-propellant charge 136 within the first pressure vessel 114. The differential in pressure between the second pressure vessel 116 and the first pressure vessel 114 is according to the configuration of pressure regulator 118, which is arranged to maintain a constant predetermined pressure within the first pressure vessel 114 as motive gas from the motive gas charge 138 drives mono-propellant from the mono-propellant charge 136 to the gas generator 104 for decomposition within the decomposition chamber 122.

In certain embodiments a hydrazine charge 140 can be disposed within the first pressure vessel 114 to form the mono-propellant charge 136. In accordance with certain embodiments a nitrogen charge 142 can be disposed within the second pressure vessel 116 and at least a portion of the first pressure vessel 114 to form the motive gas charge 138. It is also contemplated that, in accordance with certain embodiments, both hydrazine and nitrogen can be employed as the mono-propellant charge 136 and the motive gas charge 138, respectively, limiting the risks otherwise associated with handling hydrazine.

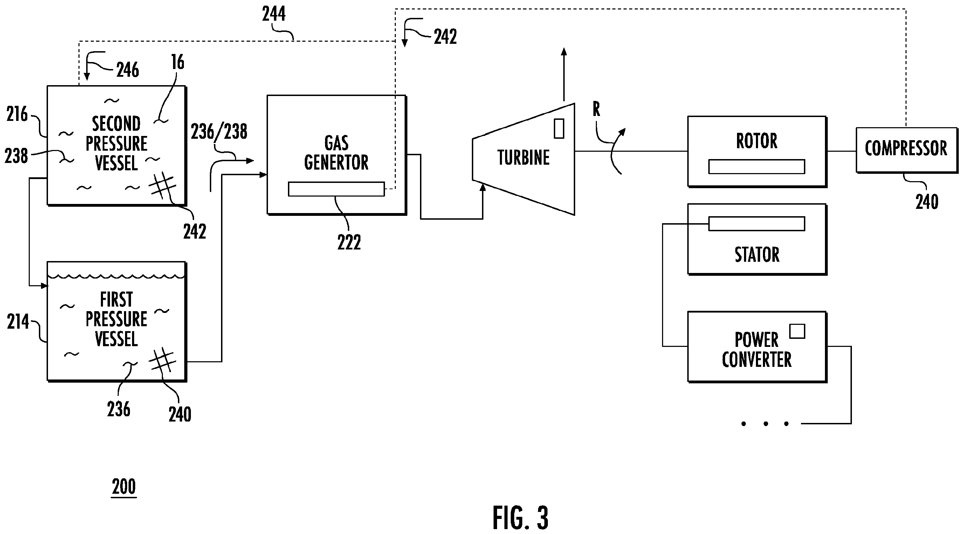

With reference to FIG. 3, a power module 200 is shown. The power module 200 is similar to the power module 100 (shown in FIG. 1) and is additionally configured for generating electrical power by oxidizing fuel from a liquid fuel charge 236 using an oxidizer, e.g., compressed air, in a combustion chamber 222. In this respect the liquid fuel charge 236 is disposed within a first pressure vessel 214, and the compressed gas charge 238 is disposed within the second pressure vessel 216 and at least partially within the first pressure vessel 214. The compressed gas charge 238 retains the liquid fuel charge 236 under substantially constant pressure according to the configuration of the pressure regular 218 and drives the liquid fuel charge 236 a gas generator 204 having a combustion chamber 222.

It is contemplated that, in certain embodiments, a turbine driven compressor 240 can provide the oxidizer to the combustion chamber 222 by compressing atmospheric air to a relatively high pressure. In such embodiments the turbine driven compressor 240 provides a first portion 242 of the compressed air flows to the combustion chamber 222 to serve as the oxidizer. A pressure tap 244 places the turbine driven compressor 240 in communication with the first pressure vessel 214, e.g., through the second pressure vessel 216, thereby allowing a second portion 246 of the compressed air pressure to pressurize the liquid fuel charge 236 contained within the first pressure vessel 214. The pressure within the first pressure vessel 214 in turn forces liquid fuel from the liquid fuel charge 236 contained within the first pressure vessel 214 into the combustion chamber 222. It is contemplated that the second portion 246 of the compressed air be smaller than the first portion 242 of the compressed air. For example, the mass flow rate of the second portion 246 of the compressed air entering the second pressure vessel 216 could be on the order of about 1/50^{th} of the mass flow rate of the first portion 242 of the compressed air entering the combustion chamber 222.

In certain embodiments a liquid kerosene-based fuel, such as a liquid JP-8, can be disposed within the first pressure vessel 214 to form the liquid fuel charge 236. In accordance with certain embodiments a compressed air charge 241 can be disposed within the second pressure vessel 216 and at least a portion of the first pressure vessel 214 to pressurize the liquid fuel disposed within the first pressure vessel 214. It is also contemplated that, in accordance with certain embodiments, compressed air and a liquid file such as JP-8 are utilized by the power module 200, limiting the complexity of the ground support equipment necessary to support the unmanned aerial vehicle, e.g., the vehicle 10 (shown in FIG. 1), carrying the power module 200. For example, the liquid JP-8 can be introduced into the first pressure vessel 214 and pressurized to about 750 psi (about 5.17e+006 newtons/square meter). The 750 psi can be achieved by providing compressed air at about 30,000 psi (about 2.07e+008 newtons/square meter) to the second pressure vessel 216, which can be achieved using an off-the-shelf multistage compressor.

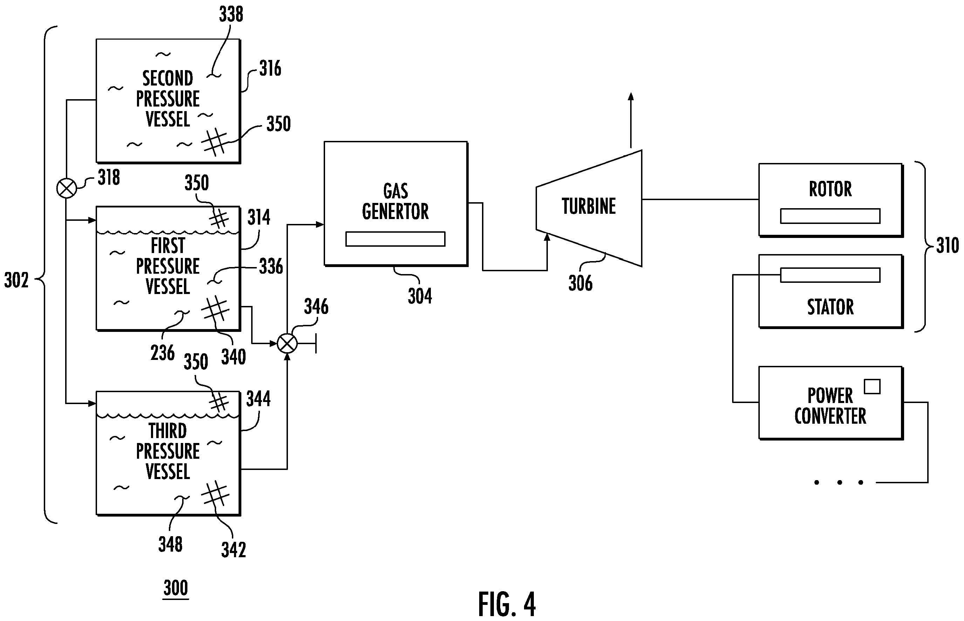

With reference to FIG. 4, a power module 300 is shown. The power module 300 is similar to the power module 100 (shown in FIG. 1) and is additionally configured for generating electrical power using an oxidizer and a fuel respectively driven to a gas generator 304 by a motive gas. In this respect the power module 300 includes the gas generator 304, a turbine 306, and a blow down system 302. The blow down system 302 includes a first pressure vessel 314, a second pressure vessel 316, and a third pressure vessel 344. The blow down system 302 also includes a pressure regulator 318 and a mixing valve 346.

The third pressure vessel 344 is operatively connected to the turbine 306. The third pressure vessel 344 also fluidly connects the second pressure vessel 316 with in series with the turbine 306. The second pressure vessel 316 is in turn fluidly connected to both the first pressure vessel 314 and the third pressure vessel 344 by the pressure regulator 318. The first pressure vessel 314 and the third pressure vessel 344 are fluidly connected to the gas generator 304 by the mixing valve 346. The mixing valve 346 is arranged to control both a ratio of oxidizer to fuel and the total mass flow rate of an oxidizer/fuel mixture provided to the gas generator 304. The gas generator 304 generates a flow of high pressure combustion products from the oxidizer/fuel mixture, which the turbine 306 expands to generate electrical power using an electrical generator 310.

A liquid fuel charge 336 is disposed within the first pressure vessel 314. An inert gas charge 338 is disposed within the second pressure vessel 316. An oxidizer charge 348 is disposed within the third pressure vessel 344. The second pressure vessel 316 maintains the inert gas charge 338 at a pressure greater than pressure within the first pressure vessel 314 and the second pressure vessel 316 to drive both liquid fuel and oxidizer to the mixing valve 346, and therethrough to gas generator 304 for combustion in a combustion chamber 322 disposed within the gas generator 304. It is contemplated that the pressure within the first pressure vessel 314 can be substantially equivalent to pressure within the third pressure vessel 344 by operation of the pressure regulator 318, which communicates pressure from the second pressure vessel 316 to the first pressure vessel 314 and the third pressure vessel 344.

In certain embodiments a liquid kerosene-based fuel, such as a liquid JP-8 charge 340, can be disposed within the first pressure vessel 314 to form the liquid fuel charge 336. In accordance with certain embodiments a nitrous oxide charge 342 can be disposed within the third pressure vessel 344. It is also contemplated that an inert gas 350, such as nitrogen, can be disposed within the second pressure vessel 316 and at least a portion of the first pressure vessel 314 and the third pressure vessel 344 to drive the liquid fuel from the JP-8 charge and oxidizer from the nitrous oxide charge 342 to the mixing valve 346, and therethrough to the gas generator 304.

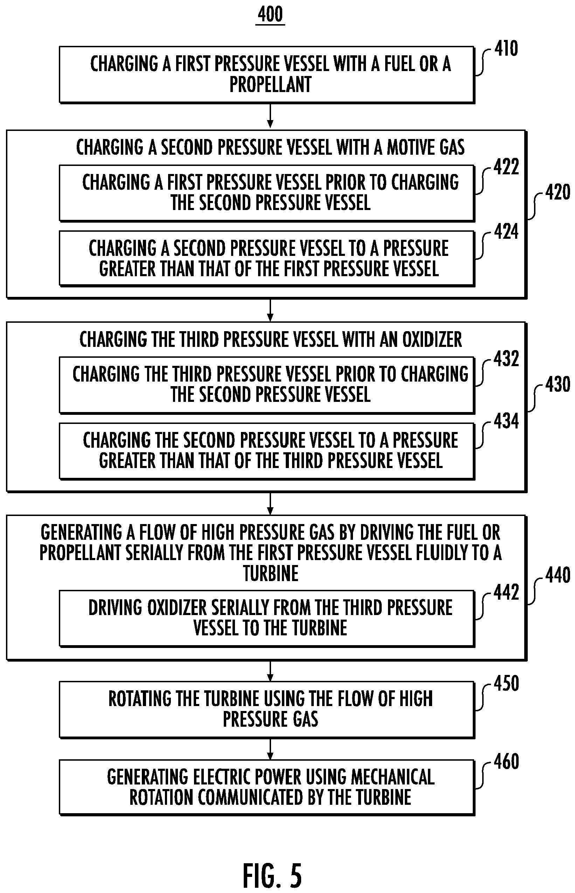

With reference to FIG. 5, a method 400 of generating electrical power is shown. The method 400 includes charging a first pressure vessel with a propellant or a fuel, e.g., the first pressure vessel 114 (shown in FIG. 2) with the mono-propellant charge 136 (shown in FIG. 2), as shown with box 410. A second pressure vessel is charged with a motive gas, e.g., the second pressure vessel 116 (shown in FIG. 2) with a motive gas 16 (shown in FIG. 2), as shown with box 420. It is contemplated that the first pressure vessel be charged prior to the second pressure vessel being charged, as shown with box 422. It also contemplated that the second pressure vessel be charged to a pressure that is greater than the pressure of the first pressure vessel, as shown with box 424.

A flow of high pressure gas is generated by driving the propellant or fuel serially from the first pressure vessel to a turbine, e.g., the turbine 106 (shown in FIG. 2), as shown with box 440. In embodiments utilizing liquid fuel the flow of high pressure gas is a flow of high pressure combustion products generated in a combustion chamber and provided to the turbine. In embodiments utilizing a mono-propellant the flow of high pressure gas is a flow of high pressure decomposition products generated in a decomposition chamber and provided to the turbine. As shown with box 450, the high pressure gas rotates the turbine. The rotation of the turbine is in turn communicated as mechanical rotation by the turbine to a generator, e.g., the electrical generator 110 (shown in FIG. 1), and electrical power generated, as shown by box 460.

In certain embodiments the method 400 can include charging a third pressure vessel with an oxidizer, e.g., the third pressure vessel 344 (shown in FIG. 4) with an oxidizer 348 (shown in FIG. 4), as shown with box 430. It is contemplated that the third pressure vessel be charged prior to the second pressure vessel being charged, as shown with box 432. It also contemplated that the third pressure vessel be charged to a pressure that is greater than the pressure of the first pressure vessel, as shown with box 434. The oxidizer is thereafter driven serially from the third pressure vessel to the turbine via a gas generator, e.g., the gas generator 304, as shown with box 442.

In embodiments described herein generator arrangements employ a blow down system to generate electric power. The blow down system includes a motive gas pressure vessel and a propellant or fuel pressure vessel in communication with a gas generator. A flow of motive gas drives propellant or fuel to a gas generator, which generates a flow of high pressure gas to a turbine. The turbine includes an impulse turbine with a single stage which is operatively connected to a generator. It is contemplated that the generator include permanent magnet generator in electrical communication with a rectifier, the rectifier arranged to rectify variable frequency power provided by the permanent magnet generator to provide constant frequency power to electrical loads carried by the vehicle.

In certain embodiments the generator arrangement can employ a mono-propellent. It is contemplated that the mono-propellant be driven to a decomposition chamber by an inert motive gas contained in the motive gas pressure vessel, such as pressurized nitrogen, which converts chemical energy contained in the mono-propellant into a flow of high pressure gases for communication to the turbine. Examples of suitable mono-propellants include hydrazine by way of non-limiting example.

In accordance with certain embodiments the generator arrangement can employ a fuel and an oxidizer. It is contemplated that the fuel and oxidizer both be driven to a combustion chamber, which generates a flow of high pressure gas for communication to the turbine by converting chemical energy contained in the fuel and oxidizer into a flow of high pressure gases. Examples of suitable fuels include JP-8. Examples of suitable oxidizers include nitrous oxide. It is contemplated that the motive gas include pressurized nitrogen.

It is also contemplated, in accordance with certain embodiments, that the drive gas be an oxidizer. In this respect the motive gas pressure vessel can include a charge of pressurized motive gas that both drives fuel from the pressurized fuel or propellant pressure vessel to the combustor, which generates a flow of high pressure gas for communication to the turbine by oxidizing the fuel using the motive gas that drove the fuel to the combustor. Examples of suitable motive gases include compressed air, which can drive a liquid fuel such as JP-8 to the combustor.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention as defined by the claims. In addition, many modifications may be made to adapt a particular situation or material to the teachings of the present disclosure without departing from the scope of the invention. Therefore, it is intended that the present disclosure not be limited to the particular embodiment disclosed as the best mode contemplated for carrying out this present disclosure, but that the present disclosure will include all embodiments falling within the scope of the claims.

## Claims

1. A power module, comprising:
a turbine (106);
a first pressure vessel (114) operatively connected to the turbine; and
a second pressure vessel (116) in fluid communication with the first pressure vessel, wherein the second pressure vessel is connected to the first pressure vessel in series to drive a fuel or a propellant charge disposed within the first pressure vessel to a gas generator for generating electrical power using the turbine.

2. The power module as recited in claim 1, further comprising a pressure regulator (118) fluidly connecting the second pressure vessel with the first pressure vessel.

3. The power module as recited in claim 1 or 2, further comprising a throttle valve (120) fluidly connecting the first pressure vessel with the turbine.

4. The power module as recited in any preceding claim, further comprising:
an electrical generator (110) operatively associated with the turbine; and
a power converter (112) electrically connected to the electrical generator.

5. The power module as recited in any preceding claim, wherein the turbine comprises an impulse turbine (126) having a single stage.

6. The power module as recited in any preceding claim, further comprising a gas generator (104) fluidly connecting the first pressure vessel with the turbine.

7. The power module as recited in claim 6, wherein the gas generator includes a decomposition chamber (122) for decomposing a liquid mono-propellant driven to the gas generator.

8. The power module as recited in claim 6, wherein the gas generator includes a combustion chamber (322) for oxidizing a liquid fuel driven to the gas generator.

9. The power module as recited in any preceding claim, wherein the fuel or propellant charge is a mono-propellant charge (136), the power module further comprising a motive gas charge disposed within the second pressure vessel and at least partially within the first pressure vessel, the second pressure vessel maintaining the motive gas charge at higher pressure than pressure of the mono-propellant within the first pressure vessel, or wherein the fuel or propellant charge is a hydrazine charge (138), the power module further comprising a nitrogen charge disposed within the second pressure vessel and at least partially within the first pressure vessel, or wherein the fuel or propellant charge is a liquid fuel charge disposed, the power module further comprising an oxidizer charge disposed within the second pressure vessel and at least partially within the first pressure vessel, the second pressure vessel maintaining the oxidizer charge at higher pressure than pressure within the first pressure vessel, or wherein the fuel or propellant charge is a JP-8 charge (236), the power module further comprising a compressed air charge disposed within the second pressure vessel and at least partially within the first pressure vessel.

10. The power module as recited in any preceding claim, further comprising a third pressure vessel (344) operatively connected to the turbine, the third pressure vessel fluidly connecting the second pressure vessel in series with the turbine.

11. The power module as recited in claim 7, further comprising a mixing valve (346) fluidly connecting the first pressure vessel and the third pressure vessel with the turbine.

12. The power module as recited in claim 10 or 11, further comprising:
a fuel charge disposed within the first pressure vessel;
an inert gas charge disposed within the second pressure vessel; and
an oxidizer charge disposed within the third pressure vessel, wherein the second pressure vessel maintains the inert gas charge at a pressure greater than pressure within the first pressure vessel and the third pressure vessel, or further comprising:
a JP-8 charge disposed within the first pressure vessel;
a nitrogen charge disposed within the second pressure vessel; and
a nitrous oxide charge disposed within the third pressure vessel,
wherein at least a portion of the first pressure vessel and the third pressure vessel are occupied by nitrogen, wherein the second pressure vessel maintains the nitrogen charge at higher pressure than pressure within the first pressure vessel and pressure within the third pressure vessel, the pressure within the third pressure vessel substantially equivalent to the pressure within the first pressure vessel.

13. An unmanned aerial vehicle, comprising:
a power module (100) as recited in any preceding claim, wherein the turbine comprises an impulse turbine having a single stage;
a pressure regulator (118) fluidly connecting the second pressure vessel with the first pressure vessel;
a throttle valve (120) fluidly connect the first pressure vessel with the turbine;
a gas generator (104) with a combustion chamber fluidly connecting the first pressure vessel with the turbine;
a liquid fuel charge (236) disposed within the first pressure vessel; and
an oxidizer charge disposed within the second pressure vessel and at least partially within the first pressure vessel, the second pressure vessel maintaining the oxidizer charge at higher pressure than pressure within the first pressure vessel;
wherein the unmanned aerial vehicle includes no fuel pumping system.

14. A method of generating electric power, comprising:
charging a first pressure vessel with a fuel or a propellant;
charging a second pressure vessel with a motive gas;
generating a flow of high pressure gas by driving the fuel or propellant serially from the first pressure vessel fluidly toward a turbine;
rotating the turbine using the flow of high pressure gas; and
generating electric power using mechanical rotation communicated by the turbine.

15. The method as recited in claim 14, wherein the first pressure vessel is charged prior to the second pressure vessel being charged, and optionally wherein the second pressure vessel is charged to a higher pressure than the first pressure vessel.
